# EUROPEAN PATENT APPLICATION

(11) **EP 4 447 370 A1**
(43) Date of publication of application: **16.10.2024**
(21) Application number: 24168395.2
(22) Date of filing: 04.04.2024
(51) Int. Cl.: H04L 5/00, H04W 76/28

(54) **PUCCH CELL SWITCHING OPERATIONS CONSIDERING CELL DRX CONFIGURATION**

(30) Priority: 12.04.2023 GB 202305387
(71) Applicant: Nokia Technologies Oy, 02610 Espoo (FI)
(72) Inventor: HUGL, Klaus, A-1070 Vienna (AT); DEGHEL, Matha, 92120 Montrouge (FR)
(74) Representative: Bryers Intellectual Property Ltd

(57) **Abstract**

Described herein is a communications apparatus, configured for determining a cell for Physical Uplink Control Channel, PUCCH, transmission for each of a plurality of slots configured, wherein the communications apparatus is configured to communicate via a first cell and a second cell, and the communications apparatus comprises:
at least one processor; and
at least one memory storing instructions that, when executed by the at least one processor, cause the communications apparatus at least to:
obtain a first cell Discontinuous Reception, DRX, configuration for the first cell, the first cell DRX configuration comprising cell DRX non-active periods and/or cell DRX active periods for the plurality of slots; and
if detecting a slot for which the first cell is at least partially in a cell DRX non-active period during the slot, determine the second cell as a cell for PUCCH transmission during the detected slot.

## Description

### TECHNOLOGY

The present disclosure relates to PUCCH cell switching, in particular to enhancements to PUCCH cell switching such as (semi-static) PUCCH cell switching using a time domain pattern.

### BACKGROUND

Any discussion of the background art throughout the specification should in no way be considered as an admission that such art is widely known or forms part of common general knowledge in the field.

Network energy saving is of great importance for environmental sustainability, to reduce environmental impact (greenhouse gas emissions), and for operational cost savings. As 5G is becoming pervasive across industries and geographical areas, handling more advanced services and applications requiring very high data rates (e.g. XR), networks being denser, using more antennas, larger bandwidths and more frequency bands. The environmental impact of 5G needs to stay under control, and novel solutions to improve network energy savings need to be developed. Approved Rel-18 NR WID on network energy saving / efficiency can be found in RP-223540.

Energy consumption has become a key part of the operators' OPEX. According to a report from the GSM Association (GSMA), the energy cost on mobile networks accounts for ~23% of the total operator cost. Most of the energy consumption comes from the radio access network and in particular from the Active Antenna Unit (AAU), with data centres and fibre transport accounting for a smaller share. The power consumption of a radio access can be split into two parts: the dynamic part which is only consumed when data transmission/reception is ongoing, and the static part which is consumed all the time to maintain the necessary operation of the radio access devices, even when the data transmission/reception is not on-going.

Discontinuous Transmission, DTX and Discontinuous Reception, DRX (such as Cell DTX/DRX) is a mechanism that has been developed to enable a RAN to save energy and lessen environmental impact. In RAN2 #119bis-e meeting, the TP for TR38.864 has endorsed in R2-2211067.

A Cell DTX/DRX is a cycle of active and non-active periods which may be configured by gNB per serving cell. In the active period of the cell DTX/DRX, the gNB switches on in intervals to perform the transmission and/or reception of signals and channels. An energy saving at the gNB may be achieved by enabling DTX/DRX with reduced transmission and reception. The cell DTX/DRX may be configured to the UE semi-statically based on a number of network parameters such as load, UE traffic, density and arrival rate.

Cell DTX/DRX may be applied to at least UEs in an RRC_CONNECTED state. A periodic Cell DTX/DRX (i.e., active and non-active periods) may be configured by the gNB via UE-specific RRC signalling per serving cell. The below provides examples of possible options of Cell DTX/DRX behaviour during non-active periods:
- Example 1: gNB is expected to turn off all transmission and reception for data traffic and reference signal during Cell DTX/DRX non-active periods.
- Example 2: gNB is expected to turn off its transmission/reception only for data traffic during Cell DTX/DRX non-active periods (i.e., gNB will still transmit/receive reference signals)
- Example 3: gNB is expected to turn off its dynamic data transmission/reception during Cell DTX/DRX non-active periods (i.e., gNB is expected to still perform transmission/reception in periodic resources, including SPS, CG-PUSCH, SR, RACH, and SRS).
- Example 4: gNB is expected to only transmit reference signals (e.g., CSI-RS for measurement).

The Cell DTX/DRX mode may be activated/de-activated via dynamic L1/L2 signalling and UE-specific RRC signaling. Both UE specific and common L1/L2 signalling could be used for activating/deactivating the Cell DTX/DRX mode. Cell DTX and Cell DRX modes may be configured and operated separately (e.g., one RRC configuration set for DL and another for UL). Cell DTX/DRX may also be configured and operated together. At least the following parameters may be configured per Cell DTX/DRX configuration: periodicity, start slot/offset, on duration. The parameters configured per Cell DTX/DRX configuration may specify time granularity such as symbol, slot, sub-frame, or frame level for different starting time, periodicity and durations of DTX/DRX activity/inactivity. Such configuration and parameters may provide DRX timing information indicative of at least one time period of cell DRX inactivity, i.e. a time period in which a gNB is unable to receive signals/transmissions from UEs (such as a Physical Uplink Control Channel (PUCCH)).

In the present disclosure, Cell DRX is considered in a scenario of Physical Uplink Control Channel (PUCCH) Cell Switching for NR (see also Sec. 9.A of TS 38.213). In Rel-17, two modes for PUCCH cell switching have been defined for Time Division Duplex (TDD) cells in NR:
1. (Semi-static) PUCCH cell switching based on a Radio Resource Control (RRC) configured time-domain pattern, which defines the cell for PUCCH transmission; and
2. (Dynamic) PUCCH cells switching based on a dynamic indication in the Downlink Control Information (DCI) scheduling Physical Downlink Shared Channel (PDSCH), indicating the applicable cell for PUCCH cell switching.

In Rel-17, one additional / alternative cell for PUCCH cell transmission, denoted as "PUCCH-sSCell", namely PUCCH switching SCell, is configured. The related procedures are described in clause 9.A of TS 38.213.

For dynamic PUCCH cell switching, the gNB can take the cell Discontinuous Reception (DRX) non-active periods into account when indicating the applicable cell for PUCCH transmission using the PUCCH cell indicator field in the DCI scheduling PDSCH.

When using semi-static PUCCH cell switching using a configured time-domain pattern as described in clause 9.A of TS 38.213, there could be cases that the cell for PUCCH transmission is having a DRX non-active period. Without any considerations, the UE would still apply the pattern independently, regardless of whether the cell of PUCCH transmission indicated by the time-domain pattern would have a DRX non-active period or not, leading to unnecessary loss of Uplink Control Information (UCI) information for which the PUCCH cell switching operation was designed to prevent in the first place.

Thus, there is a need to provide more efficient (semi-static) PUCCH cell switching (methods and apparatuses therefor), in particular when considering impacts of cell DRX non-active periods on the PUCCH cell switching, so as to preventing unnecessary UCI dropping, and to make efficient use of the power.

### SUMMARY

In accordance with a first aspect of the present disclosure, there is provided a communications apparatus, configured for determining a cell for Physical Uplink Control Channel, PUCCH, transmission for each of a plurality of slots configured, wherein the communications apparatus is configured to communicate via a first cell and a second cell, and the communications apparatus comprises:
at least one processor; and
at least one memory storing instructions that, when executed by the at least one processor,
cause the communications apparatus at least to:
   obtain a first cell Discontinuous Reception, DRX, configuration for the first cell, the first cell DRX configuration comprising cell DRX non-active periods and/or cell DRX active periods for the plurality of slots; and
   if detecting a slot for which the first cell is at least partially in a cell DRX non-active period during the slot, determine the second cell as a cell for PUCCH transmission during the detected slot.

In some examples, the communications apparatus is further caused to:
obtain a PUCCH cell switching configuration comprising a reference Subcarrier Spacing, SCS, configuration, and at least one indication based on a time domain pattern if the first cell or the second cell is to be used for PUCCH transmission for a slot of the reference SCS configuration,
wherein the communications apparatus is further caused to:
   if detecting the first cell to be at least partially in a cell DRX non-active period during a slot, determine the second cell as a cell for PUCCH transmission during the detected slot.

In some examples, the communications apparatus is further caused to:
if detecting the first cell to be in a cell DRX non-active period during the whole / full detected slot, determine the second cell as a cell for PUCCH transmission during the detected slot.

In some examples, the communications apparatus is further caused to:
obtain a second cell DRX configuration for the second cell, the second cell DRX configuration comprising cell DRX non-active periods and/or cell DRX active periods;
if detecting the first cell to be at least partially in a cell DRX non-active period during a slot, and detecting the second cell to be at least partially in a cell DRX non-active period during the slot, and:
   if detecting the first cell to be completely in a DRX non-active period during the whole / full slot, determine the second cell as a cell for PUCCH transmission during the detected slot, or
   if detecting the second cell to be completely in a DRX non-active period during the whole / full slot, determine the first cell as a cell for PUCCH transmission during the detected slot.

In some examples, the communications apparatus is further caused to:
if detecting neither the first cell to be in a DRX non-active period during a whole /full slot, nor the second cell to be in a DRX non-active period during the whole / full slot:
determine a cell for PUCCH transmission during the slot based on the at least one indication comprised in the time domain pattern, or
determine the first cell as a cell for PUCCH transmission during the slot.

In some examples, the communications apparatus is further caused to:
determine a cell for PUCCH transmission independently of the at least one indication comprised in the time domain pattern.

In some examples, the slot is a slot for PUCCH transmission of the PCell, or the PUCCH switching SCell, PUCCH-sSCell, or a slot of the reference SCS configuration.

In some examples, the communications apparatus is caused to:
if detecting the first cell to be in a cell DRX non-active period during a slot for PUCCH transmission of the first cell, determine the second cell as a cell for PUCCH transmission during the detected slot.

In some examples, the communications apparatus is further caused to:
if detecting the first cell not to be in a cell DRX non-active period during a slot for PUCCH transmission of the first cell, determine the first cell as a cell for PUCCH transmission during the detected slot.

In some examples, the communications apparatus is further caused to:
if detecting a slot for an active UL BWP of the first cell to be overlapping with a plurality of slots on an active Bandwidth Part, BWP, of the second cell, and the apparatus determined the second cell as a cell for PUCCH transmission during the slot of the first cell, wherein the communications apparatus is caused to determine the first of the plurality of slots on the active BWP of the second cell for the PUCCH transmission.

In some examples, the first cell is a PUCCH switching SCell, PUCCH-sSCell, and the second cell is a Primary Cell, PCell, or the first cell is a PCell and the second cell is a PUCCH-sSCell.

In some examples, the communications apparatus is a User Equipment, UE, and the UE is further caused to:
transmit PUCCH on the determined cell for PUCCH transmission during the slot to a gNodeB, gNB, and not transmit PUCCH on the other cell during the slot.

In some examples, the communications apparatus is a gNodeB, gNB, and the gNB is further caused to:
receive PUCCH on the determined cell for PUCCH transmission during the slot from a User Equipment, UE, and not receive PUCCH on the other cell during the slot.

In accordance with a second aspect of the present disclosure, there is provided a communications system, comprising a User Equipment, UE, a first cell and a second cell configured to cover the UE, and a gNodeB, gNB, configured to communicate with the UE via the first cell and the second cell, wherein the communications system is configured for determining a cell for Physical Uplink Control Channel, PUCCH, transmission for each of a plurality of slots configured, wherein:
at least one of the UE and the gNB is a communications apparatus according to the first aspect (and any one of the examples related thereto) of the present disclosure.

In some examples, the gNB is configured to:
transmit, to the UE, a first cell Discontinuous Reception, DRX, configuration for the first cell, the first cell DRX configuration comprising cell DRX non-active periods and/or cell DRX active periods for the plurality of slots .

In some examples, the gNB is further configured to:
transmit, to the UE, a PUCCH cell switching configuration comprising a reference Subcarrier Spacing, SCS, configuration, and at least one indication based on a time domain pattern if the first cell or the second cell is to be used for PUCCH transmission for a slot of the reference SCS configuration.

In some examples, the gNB is further configured to:
transmit, to the UE, a second cell DRX configuration for the second cell, the second cell DRX configuration comprising cell DRX non-active periods and/or cell DRX active periods.

In accordance with a third aspect of the present disclosure, there is provided a method of a communications apparatus being configured for determining a cell for Physical Uplink Control Channel, PUCCH, transmission for each of a plurality of slots configured, wherein the communications apparatus is configured to communicate via a first cell and a second cell, and the method comprises:
obtaining a first cell Discontinuous Reception, DRX, configuration for the first cell, the first cell DRX configuration comprising cell DRX non-active periods and/or cell DRX active periods for the plurality of slots; and
if detecting a slot for which the first cell is at least partially in a cell DRX non-active period during the slot, determining the second cell as a cell for PUCCH transmission during the detected slot.

In accordance with a fourth aspect of the present disclosure, there is provided a method of a communications system being configured for determining a cell for Physical Uplink Control Channel, PUCCH, transmission for each of a plurality of PUCCH slots configured for a first cell, the communications system comprising a User Equipment, UE, the first cell and a second cell configured to cover the UE, and a gNodeB, gNB, configured to communicate with the UE via the first cell and the second cell, wherein the method comprises:
at least one of the UE and the gNB performing the method according to the third aspect.

In accordance with a fifth aspect of the present disclosure, there is provided a computer program comprising instructions for causing an apparatus to perform the method according to the third aspect, or for causing a communications system to perform the method according to the fourth aspect.

In accordance with a sixth aspect of the present disclosure, there is provided a memory storing computer readable instructions for causing an apparatus to perform the method according to the third aspect, or for causing a communications system to perform the method according to the fourth aspect.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an example of a cell DRX configuration according to an example embodiment of the present disclosure;
Figure 2 schematically illustrates an example of a signaling/messaging diagram according to an example embodiment of the present disclosure;
Figures 3a to 5b schematically illustrate examples of PUCCH cell switching according to an example embodiment of the present disclosure;
Figure 6 schematically illustrates an example of PUCCH cell switching according to an example embodiment of the present disclosure; and
Figures 7a to 8 schematically illustrate examples of PUCCH cell switching according to an example embodiment of the present disclosure.

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   - The function split in this option is similar to the 1A architecture in DC. RRC is in the central unit. PDCP, RLC, MAC, physical layer and RF are in the distributed unit.
Option 2 (3C-like split):
   - The function split in this option is similar to the 3C architecture in DC. RRC and PDCP are in the central unit. RLC, MAC, physical layer and RF are in the distributed unit.
Option 3 (intra RLC split):
   - Low RLC (partial function of RLC), MAC, physical layer and RF are in the distributed unit. PDCP and high RLC (the other partial function of RLC) are in the central unit.
Option 4 (RLC-MAC split):
   - MAC, physical layer and RF are in the distributed unit. PDCP and RLC are in the central unit.
Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
- store the AS context;
- transfer unicast data to/from the UE;
- monitor control channels associated with the shared data channel to determine if data is scheduled for the data channel;
- provide channel quality and feedback information;
- perform neighboring cell measurements and measurement reporting.

The RRC protocol includes e.g. the following main functions:
- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

As illustrated above, the present disclosure generally seeks to provide a more efficient PUCCH cell switching (method and apparatus therefor), taking into consideration the impacts of cell DRX non-active periods on the PUCCH cell switching, so as to prevent the loss of uplink control information (UCI) during the cell DRX non-active periods, in particular by avoiding uncessary UCI dropping that may take place due to performing PUCCH transmission via a cell that is in the meantime in a cell DRX non-active period by using another cell for PUCCH transmission carrying the UCI. By avoiding unnecessary UCI dropping, the detrimental effects of cell DRX non-active periods on the radio performance can be mitigated.

With respect to the dynamic PUCCH cell switching, the gNB can in the DCI scheduling PDSCH indicate the PUCCH-sSCell to be used for PUCCH transmission, e.g. if the PUCCH on PCell could not be transmitted e.g. due to TDD DL collisions, and then the gNB could indicate to transmit the PUCCH at the PUCCH-sSCell due to a different TDD UL/DL-configuration rendering a PUCCH transmission possible. For this purpose, the PUCCH cell indicator field in the DCI could be provided with a value of "0" or a value of "1" indicating, respectively, whether a PUCCH transmission with the HARQ-ACK information by the UE is on the PCell or on the PUCCH-sSCell.

(Semi-static) PUCCH cell switching based on a time domain pattern is supported for TDD cells in NR / 5G since Rel-17, to enable the change of the cell carrying the PUCCH for TDD cells with different UL/DL configurations. The gNB configures a time-domain pattern by RRC of the applicable cell for PUCCH transmission, which is either the PCell (Primary Cell) / PSCell (Primary Secondary Cell) / PUCCH-SCell (PUCCH Secondary Cell) or an alternative PUCCH-sSCell (PUCCH switching SCell). Based on the time domain pattern the UE determines for each slot the applicable cell for PUCCH transmission and performs the multiplexing and transmission operation accordingly. This can be used in case that for certain slots, a PUCCH on the PCell could not be transmitted due to collision with DL operation (symbols) for TDD cells whereas at the same time due to having a different TDD-UL/DL configuration the PUCCH-sSCell would not have such collisions.

Broadly speaking, it is proposed in accordance with the present disclosure, for UEs in a cell configured/indicated with a cell DRX pattern/cycle configuration, which consists of cell DRX non-active periods and cell DRX active periods, the (semi-static) PUCCH cell switching operation using a configured time-domain pattern is enhanced to take the cell DRX non-active periods into account by specifying some related additional behaviours for PUCCH cell switching.

In accordance with the present disclosure, in addition to the support for the current (semi-static) PUCCH cell switching operation using a configured time-domain pattern, this could be also applicable to PUCCH cell switching without having a time domain pattern configured, but only switching to the PUCCH-sSCell if the PCell is a DRX-period. This can be applicable (but not limited) to FDD cells.

References are now made to the figures. In particular, it is to be noted that identical or like reference numbers used in the figures of the present disclosure may, unless indicated otherwise, indicate identical or like elements, such that repeated description thereof may be omitted for reasons of conciseness.

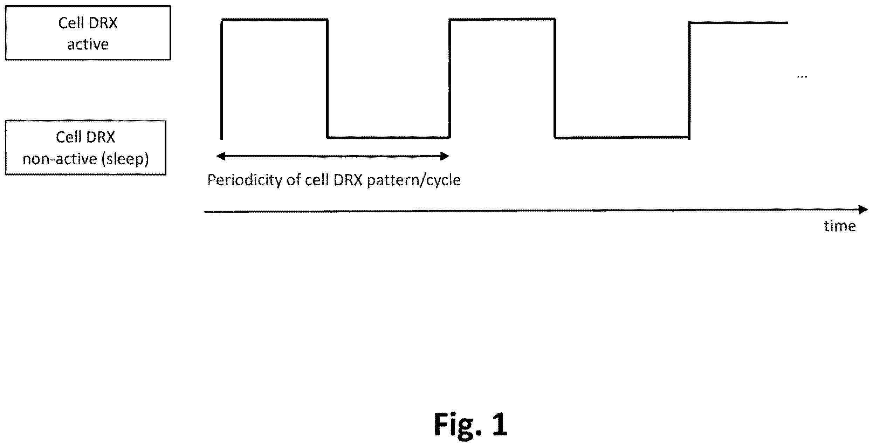

Figure 1 schematically illustrates an example of a cell DRX configuration according to an example embodiment of the present disclosure.

The illustrated cell DRX configuration comprises a plurality of consecutive cell DRX patterns / cycles, wherein in one cycle a cell DRX active period is followed by a cell DRX non-active period or a cell DRX non-active period is followed by a cell DRX active period. Specific configurations (periodicity and etc.) related to a cell DRX configuration.

Of course, Figure 1 shows merely one implementation example of cell DRX patterns, whereas the arrangement of the cell DRX active periods and the cell DRX non-active periods could also deviate from Figure 1. For instance, the length of one or more of the cell DRX active periods could be different from the length of one or more of the cell DRX non-active periods. For another example, the periodicity of the patterns could be varying along the timeline.

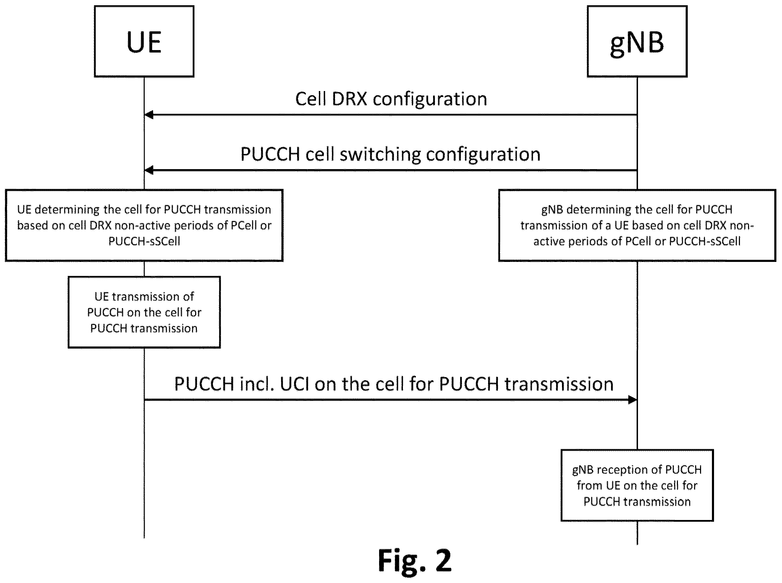

Figure 2 schematically illustrates an example of a signaling/messaging diagram according to an example embodiment of the present disclosure. Figure 2 shows merely one possible implementation example of the signaling between a gNB and a UE, and therefore for carrying out the method, it is not necessary that all steps as shown in Figure 2 would have to be performed, and not necessarily in the order as shown in Figure 2.

The signaling in accordance with the present disclosure is performed in a communications system comprising a gNB and a UE, wherein the gNB communicates with the UE via a first cell and a second cell. For instance, the first cell is a PCell and the second cell is a PUCCH-sSCell, or the first cell is a PUCCH-sSCell and the second cell is a PCell.

As illustrated, the gNB has obtained / provided a cell DRX configuration for the first cell and / or the second cell. As discussed above, a cell DRX configuration comprises DRX active periods and DRX non-active periods more specifically for a plurality of slots configured. The slot can be a slot for PUCCH transmission of the PCell, a slot for PUCCH transmission of the PUCCH-sSCell or a slot of a reference Subcarrier Spacing, SCS, configuration.

Further, the gNB can transmit, to the UE, the cell DRX configuration for the first cell and / or the second cell. Accordingly, the UE is informed of the cell DRX configuration of the first cell and / or the second cell, and therefore is informed of the DRX non-active periods configured for the first cell and / or the second cell.

Further, the gNB has obtained / provided a PUCCH cell switching configuration. A PUCCH cell switching configuration may comprise information on the PUCCH-sSCell and may further comprise signaling indicating operation according to the present disclosure. The PUCCH cell switching configuration may further comprise a reference SCS configuration, and may further comprise at least one indication based on a time domain (switching) pattern if the first cell or the second cell is to be used for PUCCH transmission for a slot of the reference SCS configuration.

In other words, when configured, the time domain (switching) pattern indicates, for a slot of the reference SCS configuration, a cell to be used for PUCCH transmission. For instance, for a slot of the reference SCS configuration, a value of "1" configured in the corresponding slot of the time domain (switching) pattern indicates the PCell to be used for PUCCH transmission, and a value of "0" indicates the PUCCH-sSCell, or the other way around.

Further, the gNB can transmit, to the UE, the PUCCH cell switching configuration. Accordingly, the UE is informed of the PUCCH-sSCell and to act according to the operation of the present disclosure. If PUCCH cell switching configuration also includes the time domain pattern, the UE is in addition informed of an indication of a cell (e.g., between the first cell and the second cell) for PUCCH transmission for a slot of the reference SCS configuration.

According to the present disclosure, based on the above cell DRX configuration(s) and / or the above PUCCH cell switching configuration, the gNB and / or the UE (when being informed of the cell DRX configuration(s) and / or the PUCCH cell switching configuration) is configured to determine a cell for PUCCH transmission. Therefore, both the gNB and the UE may be configured to determine a cell for PUCCH transmission.

In particular, at least based on the above cell DRX configuration(s) of the first cell and / or the second cell, the gNB and / or the UE can take into consideration the cell DRX non-active periods of the first cell and / or the second cell in the determination of a cell for PUCCH transmission. Consequently, by detecting the first cell or the second cell to be in a cell DRX non-active period, the gNB and / or the UE can determine to switch to the other cell.

On the determined cell for PUCCH transmission, the UE then transmits the PUCCH (including UCI) to the gNB. It is hence ensured that the PUCCH transmission is not performed in a cell DRX non-active period, thereby avoiding unnecessary UCI dropping during the cell DRX non-active periods of the cell for PUCCH transmission and may hence mitigate the detrimental effects of cell DRX on the radio performance.

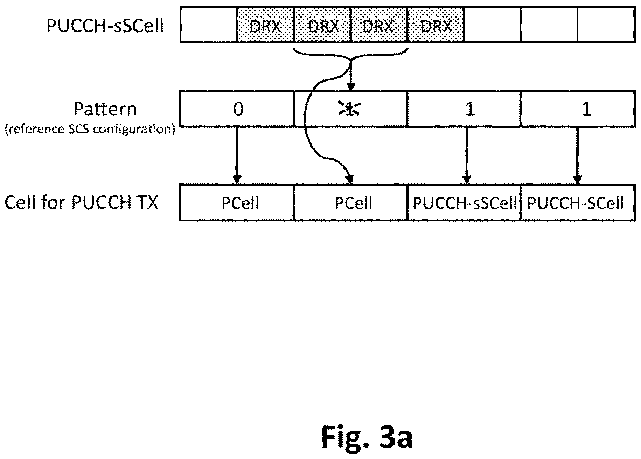

References are now made to Figures 3a to 5b, which schematically describe example embodiments (depending on various implementations) in accordance with an example embodiment of the present disclosure.

A first embodiment (Embodiment 1) is focusing only on cell DRX non-active periods of the PUCCH-sSCell (and does not consider cell DRX non-active periods of the PCell).

The reason to only consider and define specific handling cell DRX non-active periods of the PUCCH-sSCell is the fact, that the probability of cell DRX on an SCell (which is the PUCCH-sSCell) is much higher compared to the case of the PCell.

### Embodiment 1, Alternative 1:

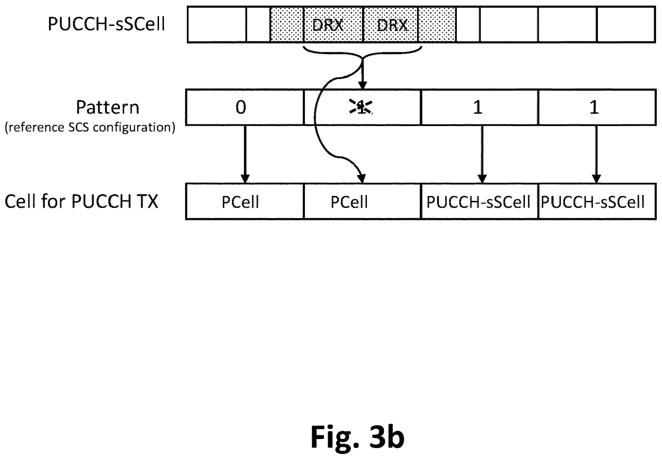

Figures 3a and 3b describe example embodiments (depending on various implementations) in accordance with an implementation (Alternative 1) in accordance with a first embodiment of the present disclosure.

In general, it is proposed: if the PUCCH-sSCell has a DRX non-active period for all PUCCH slots of the PUCCH-sSCell overlapping with a slot of the reference SCS configuration (i.e., the PUCCH-sSCell is DRX non-active during a whole slot of the reference SCS configuration), the UE determines the PCell as the cell for PUCCH transmission during the slot of the reference SCS configuration (independently of the indicated value in the time-domain pattern for that slot of the reference SCS configuration).

An example for the implementation (Alternative 1) of the first embodiment is shown in Figure 3a:
- For the 1st slot of the reference SCS configuration, the (time domain) pattern indicates "0" and the PUCCH-sSCell is in a DRX non-active period only for the second (as shown with shaded background in the slot for the PUCCH-sSCell) of the two overlapping slots of PUCCH-sSCell. Therefore, the time-domain pattern is applicable and the UE determines the PCell as the cell for PUCCH transmission for the slot of the reference SCS configuration based on the indicated value "0" of the pattern.
- For the 2nd slot of the reference SCS configuration, the pattern indicates "1" and the PUCCH-sSCell is in a DRX non-active period for both of the two overlapping slots of PUCCH-sSCell. Therefore, UE does not apply the pattern (i.e. neglects the indicated value "1") and the UE determines the PCell as the cell for PUCCH transmission for the slot of the reference SCS configuration independently of the time-domain pattern (neglecting the value of "1" pointing to the PUCCH-sSCell).
- For the 3rd slot of the reference SCS configuration, the pattern indicates "1" and the PUCCH-sSCell is in a DRX non-active period only for the first of the two overlapping slots of PUCCH-sSCell. Therefore, the pattern is applicable and the UE determines the PUCCH-sSCell as the cell for PUCCH transmission for the slot of the reference SCS configuration based on the indicated value "1".
- For the 4th slot of the reference SCS configuration, the pattern indicates "1" and the PUCCH-sSCell is not in DRX non-active period for either of the two overlapping slots of PUCCH-sSCell. Therefore, the the PUCCH cell switching time-domain pattern is applicable and the UE determines the PUCCH-sSCell as the cell for PUCCH transmission for the slot of the reference SCS configuration based on the indicated value "1".

In Figure 3a, the cell DRX configuration is shown as being provided in accordance with a slot granularity of the PUCCH-sSCell. However, the DRX active / non-active periods can be provided with a different granularity compared with that of the PUCCH slots on the PUCCH-sSCell. For instance, the length of a DRX non-active period can be different to that of a PUCCH slot on the PUCCH-sSCell.

For instance, Figure 3b shows an alternative or preferred example that the DRX non-active periods are not fully overlapping with a PUCCH slot on PUCCH-sSCell, in which case the above descripition for Figure 3a regarding the determined cell for PUCCH transmission for the 1st slot to the 4th slot of the reference SCS configuration applies analogously.

In particular, it is to be determined in accordance with Figure 3b whether a slot of the reference SCS configuration is fully overlapping with a DRX non-active period on the PUCCH-sSCell. Only when it is determined that a slot of the reference SCS configuration is fully overlapping with a DRX non-active period on the PUCCH-sSCell, the PCell is determined to be the cell for PUCCH transmission.

### Embodiment 1, Alternative 2:

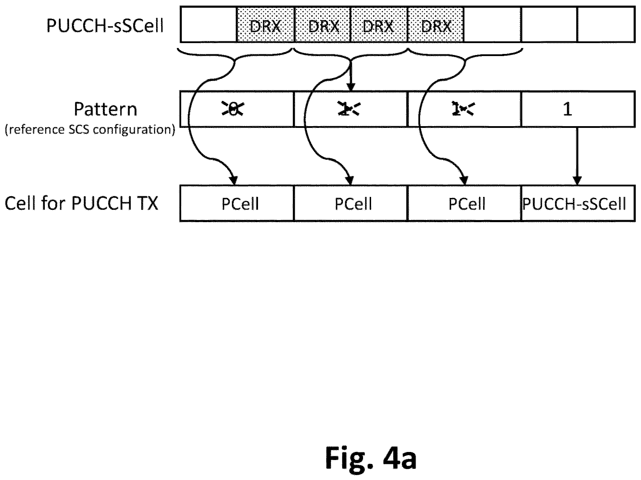

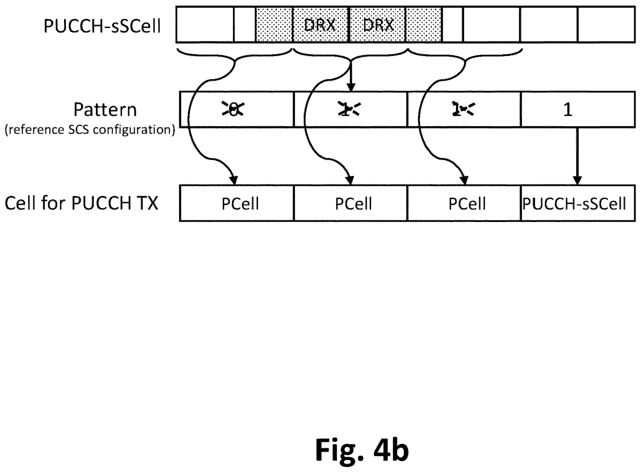

Figures 4a and 4b describe some example embodiments (depending on various implementations) in accordance with an another implementation (Alternative 2) in accordance withthe first Embodiment of the present disclosure.

In general, it is proposed: If the PUCCH-sSCell has a DRX non-active period for at least part of one of the PUCCH slots of the PUCCH-sSCell overlapping with a slot of the reference SCS configuration, the UE determines the PCell as the cell for PUCCH transmission during the slot of the reference SCS configuration (independently of the indicated value in the time-domain pattern for that slot of the reference SCS configuration).

The difference between Alternative 2 and Alternative 1 of the first embodiment lies therefore in that in accordance with Alternative 2, as long as the PUCCH-sSCell has a DRX non-active period for at least part of one of the PUCCH slots (instead of for all of the PUCCH slots) of the PUCCH-sSCell overlapping with a slot of the reference SCS configuration, the UE determines the PCell as the cell for PUCCH transmission for the slot of the reference SCS configuration.

An example for Alternative 2 of the first embodiment is shown in Figure 4a:
- For the 1st, 2nd and 3rd slot of the reference SCS configuration, the pattern indicates "0", "1" and "1"), respectively. As the PUCCH-sSCell is in a DRX non-active period for at least one of the overlapping slots of PUCCH-sSCell, the UE does not apply the pattern (i.e. neglects the indicated values "0", "1", "1", respectively) and the UE determines the PCell as the cell for PUCCH transmission for the slot of the reference SCS configuration independently of the time-domain pattern.
- For the 4th slot of the reference SCS configuration, the pattern indicates "1" and the PUCCH-sSCell is not having a DRX non-active period for either / any of the two overlapping slots of PUCCH-sSCell. Therefore, the PUCCH cell switching time-domain pattern is applicable and the UE determines the PUCCH-sSCell as the cell for PUCCH transmission for the slot of the reference SCS configuration based on the indicated value "1".

Similarly to Figure 3a, in Figure 4a, the cell DRX configuration is shown as being provided in accordance with a slot granularity of the PUCCH-sSCell. However, the DRX active / non-active periods can be provided with a different granularity compared with that of the PUCCH slots on the PUCCH-sSCell. For instance, the length of a DRX non-active period can be different to that of a PUCCH slot on the PUCCH-sSCell.

For instance, Figure 4b shows an alternative or preferred example that the DRX non-active period is only partially overlapping with a PUCCH slot on PUCCH-sSCell, in which case the above description for Figure 4a regarding the determined cell for PUCCH transmission for the 1st slot to the 4th slot of the reference SCS configuration applies analogously.

The only difference between Figure 4a and 4b is that, while in Figure 4a the PUCCH-sSCell is in a DRX non-active period for at least one of (all) the overlapping slots of PUCCH-sSCell, in Figure 4b the PUCCH-sSCell is in a DRX non-active period not for the whole duration of the at least one slot, but is partially in a DRX non-active period during at least one slot on the PUCCH-sSCell. In other words, as shown in Figure 4b the PCell is determined to be the cell for PUCCH transmission as long as the PUCCH-sSCell is in a DRX non-active period during a part of a slot of the PUCCH-sSCell that is overlapping with a slot of the reference SCS configuration.

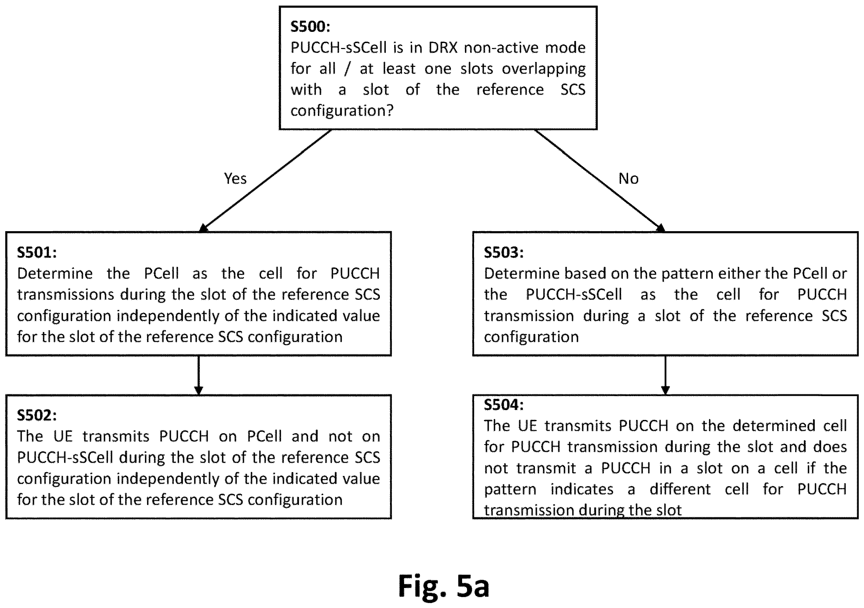

Figure 5a further describes the method steps performed in carrying out the first embodiment, where the cell DRX configuration has the same granularity as that of the PUCCH slots on the PUCCH-sSCell as described with Figures 3a and 4a.

Step S500: determining whether the PUCCH-sSCell is in DRX non-active mode for all / at least one slots overlapping with a slot of the reference SCS configuration. This step is carried out in accordance with the present disclosure by the gNB and / or the UE.

If it is determined in step S500 that the PUCCH-sSCell is in DRX non-active mode for all / at least one slots overlapping with a slot of the reference SCS configuration, the method proceeds with step S501: determining the PCell as the cell for PUCCH transmissions during the slot of the reference SCS configuration independently of the indicated value for the slot of the reference SCS configuration. This step is carried out in accordance with the present disclosure by the gNB and / or the UE.

Following step S501, the method then proceeds with step S502: the UE not transmitting PUCCH in these overlapping slots on the PUCCH-sSCell, independently of the indicated value for the slot of the reference SCS configuration, that is, the UE transmitting PUCCH on the PCell during the slot of the reference SCS configuration.

If it is determined in step S500 that the PUCCH-sSCell is not in DRX non-active mode for all / at least one slots overlapping with a slot of the reference SCS configuration, the method proceeds with step S503: determining based on the time domain pattern either the PCell or the PUCCH-sSCell as the cell for PUCCH transmission during a slot of the reference SCS configuration. This step is carried out in accordance with the present disclosure by the gNB and / or the UE.

Following step S503, the method then proceeds with step S504: the UE transmitting PUCCH on the determined cell for PUCCH transmission during the slot and not transmitting a PUCCH in a slot on a cell if the pattern indicates a different cell for PUCCH transmission during the slot.

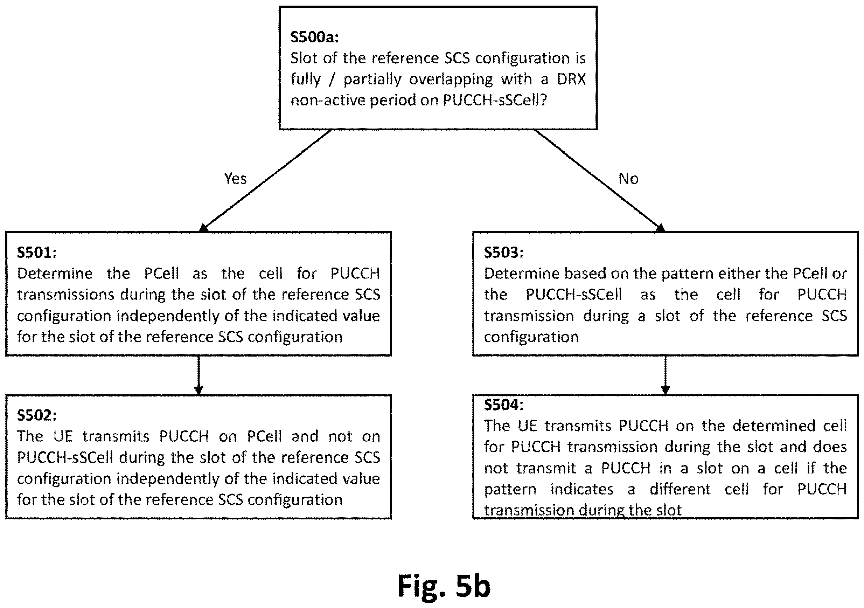

Figure 5b further describes the method steps performed in carrying out the first embodiment, where the cell DRX configuration has a different granularity compared with that of the PUCCH slots on the PUCCH-sSCell as described with Figures 3b and 4b.

Step S500a: determining if a slot of the reference SCS configuration is fully / partially overlapping with a DRX non-active period on PUCCH-sSCell. This step is carried out in accordance with the present disclosure by the gNB and / or the UE.

The method then proceeds with either steps S501 and S502 or steps S503 and S504, analogously to the scenario of Figure 5a.

### Embodiment 2

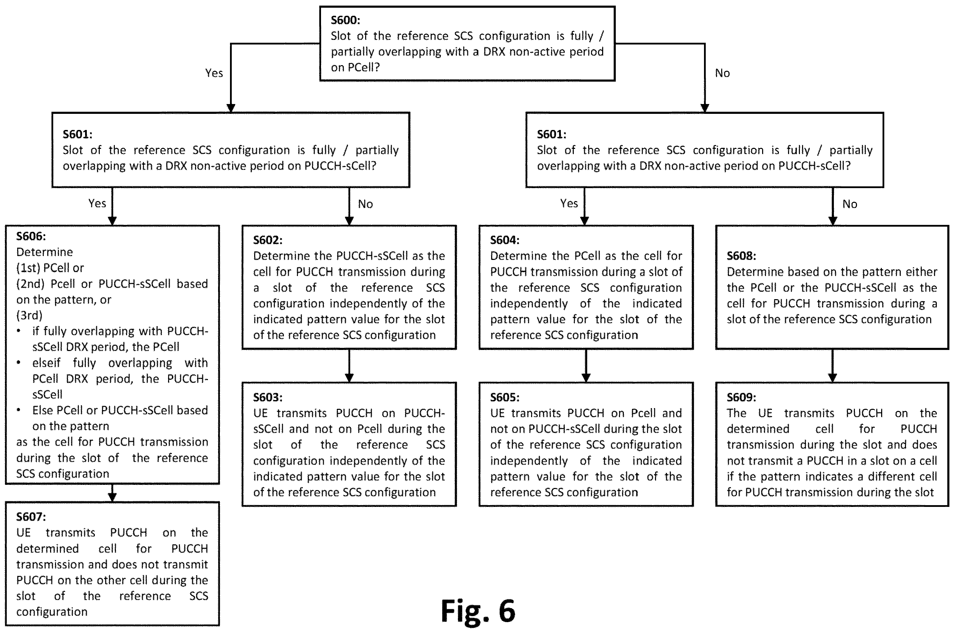

Reference is now made to Figure 6, which schematically describes some example embodiments that may (depending on various implementations) be used in conjunction with (at least partially) or as an alternative to the example embodiments as described with reference to Figures 3a to 5b.

The second embodiment (Embodiment 2) is focusing on cell DRX non-active periods of the PUCCH-sSCell and PCell.

Broadly speaking, the proposed operation is the same as that of the first embodiment, i.e. depending on having some DRX non-active period(s) on PCell and / or PUCCH-sSCell, the time-domain pattern may not be applicable:
∘ Step S600: determining whether a slot of the reference SCS configuration is fully / partially overlapping with a DRX non-active period on PCell. Of course, alternatively or additionally, step S600 determines whether the PCell is in DRX non-active mode for all / at least (part of) one slots overlapping with a slot of the reference SCS configuration. This step is carried out in accordance with the present disclosure by the gNB and / or the UE.
∘ Step S601: determining whether a slot of the reference SCS configuration is fully / partially overlapping with a DRX non-active period on PUCCH-sSCell, and alternatively or additionally, determining whether the PUCCH-sCell is in DRX non-active mode for all / at least one slots overlapping with a slot of the reference SCS configuration. This step is carried out in accordance with the present disclosure by the gNB and / or the UE.
∘ Of course, steps S600 and S601 do not have to be carried out in the order of Figure 6. It is to be determined whether, for one or both of the PCell and the PUCCH-sCell, a slot of the reference SCS configuration is fully / partially overlapping with a DRX non-active period.
∘ Step S602: If determining that the slot of the reference SCS configuration is only fully / partially overlapping with a DRX non-active period of the PCell (but not overlapping with a DRX non-active period of the PUCCH-sSCell), determining the PUCCH-sSCell as the cell for PUCCH transmission for that slot of the reference SCS configuration (independently of the indicated value in the time-domain pattern for that slot of the reference SCS configuration). This step is carried out in accordance with the present disclosure by the gNB and / or the UE.
   - Then in Step S603: the UE transmitting the PUCCH on PUCCH-sSCell and not on PCell during the slot of the reference SCS configuration independently of the indicated pattern value for the slot of the reference SCS configuration.
∘ Step S604: If determining that the slot of the reference SCS configuration is only fully / partially overlapping with a DRX non-active period of the PUCCH-sSCell (but not overlapping with a DRX non-active period of the PCell), determining the PCell as the cell for PUCCH transmission for that slot of the reference SCS configuration (independently of the indicated value in the time-domain pattern for that slot of the reference SCS configuration). This step is carried out in accordance with the present disclosure by the gNB and / or the UE.
   - Then in Step S605: the UE transmitting PUCCH on PCell and not on PUCCH-sSCell during the slot of the reference SCS configuration independently of the indicated pattern value for the slot of the reference SCS configuration.
∘ Step S606: If determining that the slot of the reference SCS configuration is fully / partially overlapping with a DRX non-active period of the PUCCH-sSCell and fully / partially overlapping with a DRX non-active period of the PCell (this step being carried out in accordance with the present disclosure by the gNB and / or the UE):
   - In a first implementation, determining based on the time domain pattern either the PCell or the PUCCH-sSCell as the cell for PUCCH transmission for the slot of the reference SCS configuration.
   - In a second implementation, determining the PCell as the cell for PUCCH transmission for the slot of the reference SCS configuration (independently of the indicated value in the time-domain pattern for that slot of the reference SCS configuration).
   - In third implementation, the following operation is applied:
      - If determining that the slot of the reference SCS configuration is fully overlapping with a DRX non-active period of the PUCCH-sSCell, determining the PCell as the cell for PUCCH transmission for the slot of the reference SCS configuration (independently of the indicated value in the time-domain pattern for that slot of the reference SCS configuration);
      - ElseIf determining that the slot of the reference SCS configuration is fully overlapping with a DRX non-active period of the PCell, determining the PUCCH-sSCell as the cell for PUCCH transmission for the slot of the reference SCS configuration (independently of the indicated value in the time-domain pattern for that slot of the reference SCS configuration);
      - else either
         ∘ Option 1: determining the PCell as the cell for PUCCH transmission for the slot of the reference SCS configuration (independently of the indicated value in the time-domain pattern for that slot of the reference SCS configuration);
         ∘ Option 2: determining based on the time domain pattern either the PCell or the PUCCH-sSCell as the cell for PUCCH transmission for the slot of the reference SCS configuration.
   - Then in Step 607: the UE transmitting PUCCH on the determined cell for PUCCH transmission and not transmitting PUCCH on the other cell during the slot of the reference SCS configuration.
      ∘ Step S608: If determining that the slot of the reference SCS configuration is neither fully / partially overlapping with a DRX non-active period of the PUCCH-sSCell nor fully / partially overlapping with a DRX non-active period of the PCell (this step being carried out in accordance with the present disclosure by the gNB and / or the UE):
   - Determining based on the time domain pattern either the PCell or the PUCCH-sSCell as the cell for PUCCH transmission for the slot of the reference SCS configuration;
   - Then in Step S609: the UE transmitting PUCCH on the determined cell for PUCCH transmission during the slot and does not transmit a PUCCH in a slot on a cell if the pattern indicates a different cell for PUCCH transmission during the slot.

The operation of Embodiment 1 (including both alternatives / implementations) as well as Embodiment 2 (including all implementation options described) could be either determined by:
- defined / fixed in the specifications
   ∘ i.e. each UE supporting both cell DRX/DTX and semi-static PUCCH cell switching would also support the intended enhanced operation and apply it automatically;
- based on UE capability signalling
   ∘ UE would indicate if supporting the enhanced semi-static PUCCH cell switching and applies it if supporting it;
- based on higher layer signaling by the gNB (such as RRC configuration and/or MAC CE activation)
   ∘ For this case, there could be both Embodiments and/or various implementations for the two embodiments specified, and the gNB indicating if the UE to apply it and potentially which one to be applicable.

### Embodiment 3

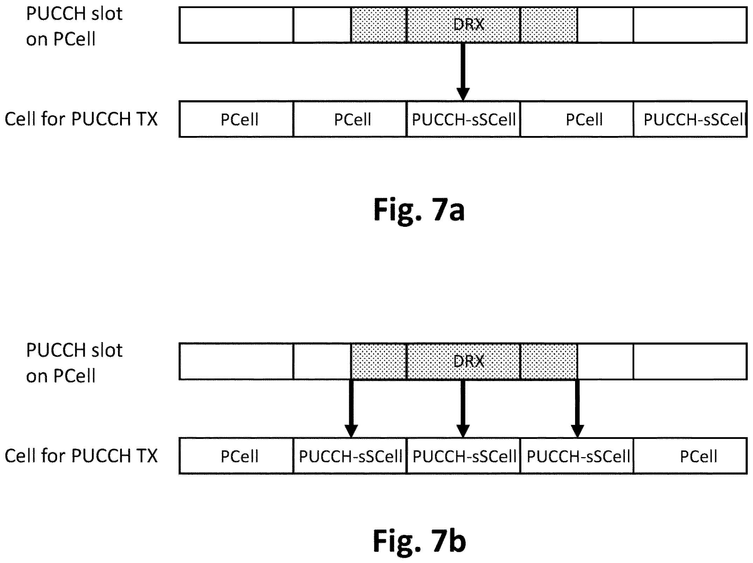

References are now made to Figures 7a to 8, which schematically describe some example embodiments that may (depending on various implementations) be used in conjunction with (at least partially) or as an alternative to the example embodiments as described with reference to Figures 3a to 6.

A third embodiment (Embodiment 3) can be applicable to Frequency Division Duplex (FDD) cell operation with cell DRX non-active periods on the PCell without having the time-domain pattern supported (as in Rel-17) - i.e. introducing PUCCH cell switching based on cell DRX for FDD cells. But the third embodiment is equally applicable also for Time Division Duplex (TDD) cell operation without having the time-domain pattern for semi-static PUCCH cell switching configured.

Broadly speaking, it is proposed: If during a PUCCH slot of PCell the PCell has a / is in a DRX non-active period, the UE determines the PUCCH-sSCell as the cell for PUCCH transmission during the PUCCH slot of PCell.

The operation of the third embodiment (without the pattern being configured) can be enabled based on higher layer signaling by the gNB (such as RRC configuration and/or MAC CE activation, wherein, e.g., the gNB can indicate which one to be applicable).

Figures 7a to 8 describe (depending on various implementations) an implementation in accordance with the third embodiment of the present disclosure.

As shown in Figure 7a, it is determined for each PUCCH slot of the PCell, whether a PUCCH slot of the PCell is completely overlapping with a DRX non-active period of the PCell. If it is determined that the PUCCH slot of the PCell is completely overlapping with a DRX non-active period of the PCell, then the other cell, namely the PUCCH-sSCell is determined to be the cell for PUCCH transmission during the PUCCH slot of the PCell. If it is determined that the PUCCH slot of the PCell is not completely overlapping with a DRX non-active period of the PCell, the PCell is determined to be the cell for PUCCH transmission during the PUCCH slot of the PCell - meaning that no PUCCH cell switching from PCell to PUCCH-sSCell is performed.

As shown in Figure 7b, it is determined for each PUCCH slot of the PCell, whether a PUCCH slot of the PCell is at least partially overlapping with a DRX non-active period of the PCell. If it is determind that the PUCCH slot of PCell is at least partially overlapping with a DRX non-active period of the PCell, then the other cell, namely the PUCCH-sSCell is determined to be the cell for PUCCH transmission during the PUCCH slot of PCell. If it is determined that the PUCCH slot of the PCell is not at all overlapping with a DRX non-active period of the PCell, the PCell is determined to be the cell for PUCCH transmission during the PUCCH slot of the PCell - meaning that no PUCCH cell switching from PCell to PUCCH-sSCell is performed.

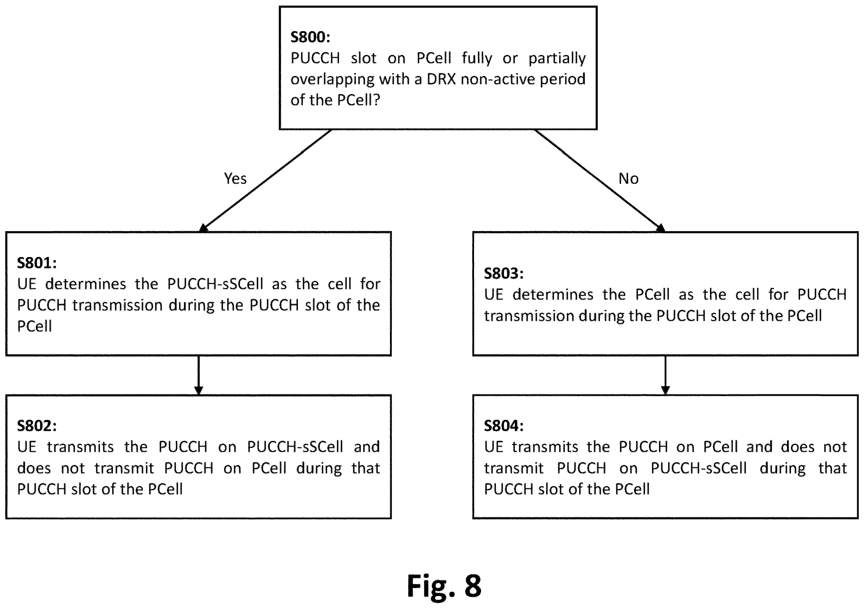

Figure 8 describes the method steps performed in carrying out the third embodiment, wherein a time-domain pattern is not involved:

Step S800: determining if the PUCCH slot on the PCell is fully or partially overlapping with a DRX non-active period of the PCell. This step is carried out in accordance with the present disclosure by the gNB and / or the UE.

If it is determined in step S800 that the PUCCH slot on the PCell is fully or partially overlapping with a DRX non-active period of the PCell, the method proceeds with step S801, the UE determining the PUCCH-sSCell as the cell for PUCCH transmission during the PUCCH slot of the PCell, and further with step S802, the UE transmitting the PUCCH on PUCCH-sSCell and not transmitting PUCCH on PCell during that PUCCH slot of the Pcell.

If it is determined in step S800 that the PUCCH slot on the Pcell is not fully or partially overlapping with a DRX non-active period of the PCell, the method proceeds with step S803, the UE determining the PCell as the cell for PUCCH transmission during the PUCCH slot of the Pcell, and further with step S804, the UE transmitting the PUCCH on PCell and not transmitting PUCCH on PCell during that PUCCH-sSCell slot of the Pcell.

The operation of Embodiment 3 could be determined based on higher layer signaling by the gNB (such as RRC configuration and/or MAC CE activation) either:
- Implictly:
   ∘ For this case the UE applies it, if either
      ▪ the gNB indicating to the UE a PUCCH-sSCell but not indicating a time domain pattern for semi-static PUCCH cell switching, or
      ▪ the gNB indicating to the UE a PUCCH-sSCell but neither indicating a time domain pattern for semi-static PUCCH cell switching nor indicating dynamic PUCCH cell switching based on DCI indication.
- Based on explicit gNB indication
   ∘ For this case, the gNB explicitly indicating to the UE to apply it.

For all of the above three embodiments, according to the present disclosure, it is in general further proposed: if detecting a slot for an active UL Bandwidth Part (BWP) of the first cell to be overlapping with a plurality of slots on an active Bandwidth Part, BWP, of the second cell, and it is determined the second cell as a cell for PUCCH transmission during the slot of the first cell, wherein the communications apparatus can determine the first of the plurality of slots on the active BWP of the second cell for the PUCCH transmission.

In accordance with the present disclosure, it is proposed a more efficient PUCCH cell switching, in particular by defining impacts of cell DRX on the PUCCH cell switching operations, so as to prevent unnecessary PUCCH / UCI dropping due to cell DRX non-active periods of a cell. As a result, even during cell DRX non-active periods, it can be ensured that the PUCCH is successfully transmitted, leading to improved radio performance by still enabling the UCI carried on PUSCH to be transmitted by the UE / received by the gNB.

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

### List of abbreviations:

5G - 5^{th} Generation
gNB - 5G / NR base station
NR - New Radio
RAN - Radio Access Network
UE - User Equipment
TRP - Transmission Reception Point
UL - Uplink
DL - Downlink
DCI - Downlink Control Information
DRX - Discontinuous Reception
DTX - Discontinuous Transmission
MAC CE - Medium Access Control Control Element
PUCCH - Physical Uplink Control Channel
PUCCH-SCell - PUCCH Secondary Cell
PUCCH-sSCell - PUCCH switching SCell
PUSCH - Physical Uplink Shared Channel
PDCCH - Physical Downlink Control Channel
PDSCH - Physical Downlink Shared Channel
TCI - Transmission Configuration Indicator
TDM - Time Division Multiplexing
UCI - Uplink Control Information
FR 1 - Frequency Range 1
SR - Scheduling Request
CSI - Channel State Information
HARQ - Hybrid Automatic Repeat request
HARQ-ACK - HARQ Acknowledgment
CCE - Control Channel Element
CORESET - Control Resource Set
SCell - Secondary Cell
SCS - SubCarrier Spacing
SRS - Sounding Reference Signal
SRI - SRS resource indicator
SSB - Synchronization Signal Block
PCell - Primary Cell
PSCell - Primary SCell
RS - Reference Signal
RNTI - Radio-Network Temporary Identifier
C-RNTI - Cell Radio-Network Temporary Identifier

## Claims

1. A communications apparatus, configured for determining a cell for Physical Uplink Control Channel, PUCCH, transmission for each of a plurality of slots configured, wherein the communications apparatus is configured to communicate via a first cell and a second cell, and the communications apparatus comprises:
at least one processor; and
at least one memory storing instructions that, when executed by the at least one processor,
cause the communications apparatus at least to:
obtain a first cell Discontinuous Reception, DRX, configuration for the first cell, the first cell DRX configuration comprising cell DRX non-active periods and/or cell DRX active periods for the plurality of slots; and
if detecting a slot for which the first cell is at least partially in a cell DRX non-active period during the slot, determine the second cell as a cell for PUCCH transmission during the detected slot.

2. The communications apparatus according to claim 1, wherein the communications apparatus is further caused to:
obtain a PUCCH cell switching configuration comprising a reference Subcarrier Spacing, SCS, configuration, and at least one indication based on a time domain pattern if the first cell or the second cell is to be used for PUCCH transmission for a slot of the reference SCS configuration,
wherein the communications apparatus is further caused to:
if detecting the first cell to be at least partially in a cell DRX non-active period during a slot, determine the second cell as a cell for PUCCH transmission during the detected slot.

3. The communications apparatus according claim 2, wherein the communications apparatus is further caused to:
if detecting the first cell to be in a cell DRX non-active period during the whole detected slot, determine the second cell as a cell for PUCCH transmission during the detected slot.

4. The communications apparatus according to claim 2 or 3, wherein the communications apparatus is further caused to:
obtain a second cell DRX configuration for the second cell, the second cell DRX configuration comprising cell DRX non-active periods and/or cell DRX active periods;
if detecting the first cell to be at least partially in a cell DRX non-active period during a slot,
and detecting the second cell to be at least partially in a cell DRX non-active period during the slot, and:
if detecting the first cell to be completely in a DRX non-active period during the whole slot, determine the second cell as a cell for PUCCH transmission during the detected slot, or
if detecting the second cell to be completely in a DRX non-active period during the whole slot, determine the first cell as a cell for PUCCH transmission during the detected slot.

5. The communications apparatus according to claim 4, wherein the communications apparatus is further caused to:
if detecting neither the first cell to be in a DRX non-active period during a whole slot, nor the second cell to be in a DRX non-active period during the whole slot:
determine a cell for PUCCH transmission during the slot based on the at least one indication comprised in the time domain pattern, or
determine the first cell as a cell for PUCCH transmission during the slot.

6. The communications apparatus according to any one of claims 2 to 5, wherein the communications apparatus is further caused to:
determine a cell for PUCCH transmission independently of the at least one indication comprised in the time domain pattern.

7. The communications apparatus according to any one of claims 1 to 6, wherein the slot is a slot for PUCCH transmission of the PCell, or the PUCCH switching SCell, PUCCH-sSCell, or a slot of the reference SCS configuration.

8. The communications apparatus according to claim 1, wherein the communications apparatus is caused to:
if detecting the first cell to be in a cell DRX non-active period during a slot for PUCCH transmission of the first cell, determine the second cell as a cell for PUCCH transmission during the detected slot.

9. The communications apparatus according to claim 8, wherein the communications apparatus is further caused to:
if detecting the first cell not to be in a cell DRX non-active period during a slot for PUCCH transmission of the first cell, determine the first cell as a cell for PUCCH transmission during the detected slot.

10. The communications apparatus according to any one of claims 1 to 9, wherein the first cell is a PUCCH switching SCell, PUCCH-sSCell, and the second cell is a Primary Cell, PCell, or the first cell is a PCell and the second cell is a PUCCH-sSCell.

11. The communications apparatus according to any one of claims 1 to 10, wherein the communications apparatus is a User Equipment, UE, and the UE is further caused to:
transmit PUCCH on the determined cell for PUCCH transmission during the slot to a gNodeB, gNB, and not transmit PUCCH on the other cell during the slot.

12. The communications apparatus according to any one of claims 1 to 9, wherein the communications apparatus is a gNodeB, gNB, and the gNB is further caused to:
receive PUCCH on the determined cell for PUCCH transmission during the slot from a User Equipment, UE, and not receive PUCCH on the other cell during the slot.

13. A communications system, comprising a User Equipment, UE, a first cell and a second cell configured to cover the UE, and a gNodeB, gNB, configured to communicate with the UE via the first cell and the second cell, wherein the communications system is configured for determining a cell for Physical Uplink Control Channel, PUCCH, transmission for each of a plurality of slots configured, wherein:
at least one of the UE and the gNB is a communications apparatus according to any one of claims 1 to 9.

14. A method of a communications apparatus being configured for determining a cell for Physical Uplink Control Channel, PUCCH, transmission for each of a plurality of slots configured, wherein the communications apparatus is configured to communicate via a first cell and a second cell, and the method comprises:
obtaining a first cell Discontinuous Reception, DRX, configuration for the first cell, the first cell DRX configuration comprising cell DRX non-active periods and/or cell DRX active periods for the plurality of slots; and
if detecting a slot for which the first cell is at least partially in a cell DRX non-active period during the slot, determining the second cell as a cell for PUCCH transmission during the detected slot.

15. A method of a communications system being configured for determining a cell for Physical Uplink Control Channel, PUCCH, transmission for each of a plurality of PUCCH slots configured for a first cell, the communications system comprising a User Equipment, UE, the first cell and a second cell configured to cover the UE, and a gNodeB, gNB, configured to communicate with the UE via the first cell and the second cell, wherein the method comprises:
at least one of the UE and the gNB performing the method of claim 14.
